# EUROPEAN PATENT APPLICATION

(11) **EP 4 733 539 A1**
(43) Date of publication of application: **29.04.2026**
(21) Application number: 25200127.6
(22) Date of filing: 04.09.2025
(51) Int. Cl.: E21B 21/015, E21B 49/02, G01N 1/02

(54) **SAMPLING SYSTEM, DUST REMOVAL ARRANGEMENT, AND METHOD FOR TAKING SAMPLE**

(30) Priority: 25.10.2024 FI 20246259
(71) Applicant: Erimek Oy, 01620 Vantaa (FI)
(72) Inventor: LINDFORS, Erik, 01620 Vantaa (FI); LINDFORS, Olli, 01650 Vantaa (FI)
(74) Representative: Papula Oy

(57) **Abstract**

A sampling system (100) for taking a sample from drill cuttings flow in a dust removal pipe (5) of a drilling apparatus, wherein the sampling system (100) comprises a sampling arrangement (6). The sampling arrangement (6) comprises a sampling pipe (7), wherein at an end of the sampling pipe (7) there is a suction opening (8) which is arranged to be positioned in the dust removal pipe (5) of the drilling apparatus to suck drill cuttings into the sampling pipe (7). The sampling arrangement (6) comprises further a control arrangement (101) comprising a control system (30) for controlling the operation of the sampling system (1). The control system (30) comprises a controller (31), a sampling valve (36), and a flow sensor pipe (32) comprising a flow sensor (33) and a second flow sensor pipe end (35) arranged to be positioned in the dust removal pipe (5) of the drilling apparatus. The controller (31) is configured to turn on the sampling valve (36) for conveying compressed air into the sampling pipe (7) when the flow sensor (33) detects air flow in the flow sensor pipe (32) and turn off the sampling valve (36) when the air flow stops. Also, a dust removal arrangement (1) and a method for taking a sample from drill cuttings flowing in a dust removal pipe (5) is disclosed.

## Description

### FIELD OF THE INVENTION

The current disclosure relates to a sampling system, a dust removal arrangement, and a method for taking a sample from drill cuttings.

### BACKGROUND

Sampling systems are used for taking a sample of drill cuttings flow from a dust removal pipe of a drilling apparatus. However, the sampling systems may further be developed by making sampling easier.

### SUMMARY

This summary is provided to introduce a selection of concepts in a simplified form that are further described below in the detailed description. This summary is not intended to identify key features or essential features of the claimed subject matter, nor is it intended to be used to limit the scope of the claimed subject matter. The scope of protection sought for various embodiments of the present disclosure is set out by the independent claims.

Example embodiments of the present disclosure automate sampling and reduce the amount of manual work involved in the sampling. Further advantageous implementation forms are provided in the dependent claims, the description, and the drawings.

According to a first aspect, a sampling system for taking a sample from drill cuttings flow in a dust removal pipe of a drilling apparatus is disclosed, wherein the sampling system comprises a sampling arrangement comprising a sampling pipe, wherein at an end of the sampling pipe there is a suction opening which is arranged to be positioned in the dust removal pipe of the drilling apparatus to suck drill cuttings into the sampling pipe; and a control arrangement comprising a control system for controlling the operation of the sampling system, wherein the control system comprises a controller; a sampling valve; and a flow sensor pipe comprising a flow sensor and a second flow sensor pipe end arranged to be positioned in the dust removal pipe of the drilling apparatus, wherein the controller is configured to turn on the sampling valve for conveying compressed air into the sampling pipe when the flow sensor detects air flow in the flow sensor pipe; and turn off the sampling valve when the air flow stops. A first flow sensor pipe end may be arranged to be positioned in free air outside the dust removal pipe of the drilling apparatus. This may allow the air flow through the flow sensor pipe. The control arrangement may automate the operation of the device so that manual starting and ending may not be needed any more. When the air flow in the flow sensor pipe is detected it may turn on the sampling valve automatically and turn it automatically off when the air flow stops.

According to an example embodiment of the first aspect, the control system further comprises a flushing valve, wherein the controller is configured to turn on the flushing valve for conveying compressed air or cleaning fluid into the sampling pipe before the controller turns on the sampling valve; and/or turn on the flushing valve for conveying the compressed air or cleaning fluid into the sampling pipe after the controller has turned off the sampling valve. The controller may turn on the flushing valve for a predetermined time period. The control arrangement may automate the operation of the device so that manual cleaning may not be needed any more.

According to an example embodiment of the first aspect, the control system further comprises at least one of the following: a heat sensor, a heater unit, a transceiver, a flow sensor filter, and/or an air or fluid filter. The control arrangement may have different sensors and systems to allow better control of the control system. The heater may heat the control system and the transceiver may send and receive information.

According to an example embodiment of the first aspect, the controller is configured to switch on the heater unit when temperature inside the control system reaches a temperature threshold value or falls below the temperature threshold value; and/or switch off the heater unit when temperature inside the control system rises above the temperature threshold value. The temperature sensor inside the control system may allow the controller to recognise when to switch on or off the heater unit automatically. The temperature threshold value may be changed through the controller. The controller may have a memory for storing different values and control and sampling system information.

According to an example embodiment of the first aspect, the controller is configured to turn on the sampling valve when flow rate inside the sensor pipe reaches a flow threshold value or exceeds the flow threshold value; and turn off the sampling valve when the flow rate inside the sensor pipe goes below the flow threshold value. The controller may receive a flow sensor value from the flow sensor of the sensor pipe. From the flow sensor value the controller may recognise when to turn on or off the sampling valve automatically. Through the controller it may also be possible to change the flow threshold value.

According to an example embodiment of the first aspect, the flow sensor is digital or analog. It may be possible to use digital or analog sensors.

According to an example embodiment of the first aspect, the control arrangement further comprises at least one remote controller, configured to remotely turn on or off the sampling valve, and/or turn on or off the flushing valve. The remote controller may be used as a backup for controlling the sampling system remotely, for example inside a drilling machine cabin.

According to an example embodiment of the first aspect, the control arrangement further comprises at least one beacon comprising at least one light configured to indicate at least one of the following: an error mode, ready to start mode, and/or ongoing sampling mode. Different colors or their combinations may be used to easily show mode of the sampling system. The beacon may have three different colored lights: red, yellow and green. A red light may mean an error in the sampling system, for example a faulty flushing or sampling valve line. A yellow light may be a standby indicator, when the sampling system is waiting for the start command. A green light may mean that sampling is on if the flow sensor detects the air flow.

According to an example embodiment of the first aspect, the control arrangement further comprises at least one of the following: a hyperspectral camera, an application server cloud, and/or a mobile device comprising a mobile application. The mobile application may be configured to be used for remote controlling and monitoring the sampling system. The mobile application may be used for remote controlling, programming, adjusting, and/or monitoring the sampling system. The application server cloud may be used to save data from the sampling system.

According to an example embodiment of the first aspect, the transceiver is configured to transmit radio signals to and/or receive radio signals from at least one of the following: the hyperspectral camera, the application server cloud, the mobile device, the remote controller, the sampling arrangement, and/or the beacon for sending sampling system information and/or receiving control and/or sampling system information. The transceiver may allow the sampling system to be wirelessly controlled, programmed, and/or adjusted. In addition to that, it may also allow the sampling system to transmit the sampling system information from the operation of the sampling system, information about its status and adjustments, and if available sensor data of the drill cuttings mineral quality, for example metal or other elements percentages.

According to an example embodiment of the first aspect, the control information comprises at least one of the following: information about when to turn on or off sampling or flushing, flushing time, a sampling method, sampling time, sampling pause time, flushing pause time, a flow sensor type, a flow limit for start-up, and/or a heater switch on limit. Different control information may be given to the sampling system to remote control the sampling system.

According to an example embodiment of the first aspect, the sampling system information comprises at least one of the following: status of the flushing valve, status of the flow sensor, and/or status of the heat sensor; sensor data of the drill cuttings mineral quality; and/or usage history. Different sampling system information may be received from the sampling system to remote monitor and control the sampling system.

According to an example embodiment of the first aspect, the sampling system is configured to operate in a continuous sampling mode or in a periodic sampling mode. The sampling system may operate in different sampling modes. In the continuous sampling mode, a flush or blow may be made at start-up, after which sampling may be activated. When the sampling ends, the flushing or blowing may be performed again. Flushing or blowing time may be adjusted from parameters. The periodic sampling mode may have adjustable sampling time and pause time. The sampling time may define how long the sample is taken, and the pause time may define the time between samplings. For the periodic sampling, it may also be possible to set flushing pause time, in which case flushing may be performed after each sampling period. The flushing time must be shorter than the pause time so that the sampling works as desired.

According to a second aspect, a dust removal arrangement of a drilling apparatus is disclosed, which dust removal arrangement comprises: a dust removal housing to be fitted around or close a mouth opening of a borehole, a dust removal pipe connected to the dust removal housing, a suction apparatus for forming suction in the dust removal housing and the dust removal pipe, and a sampling system for taking a sample from drilling dust flowing in the dust removal pipe of the drilling apparatus according to the first aspect above and any one of the example embodiments of the first aspect above, wherein the sampling system comprises: a sampling arrangement comprising a sampling pipe, wherein at an end of the sampling pipe there is a suction opening which is arranged to be positioned in the dust removal pipe of the drilling apparatus to suck drilling dust into the sampling pipe; and a control arrangement comprising a control system for controlling the operation of the sampling system.

According to a third aspect, a method for taking a sample from drill cuttings flowing in a dust removal pipe of a drilling apparatus using a sampling system is disclosed, wherein the sampling system comprises: a sampling arrangement comprising a sampling pipe, wherein at an end of the sampling there is a suction opening which is arranged to be positioned in the dust removal pipe of the drilling apparatus to suck drill cuttings into the sampling pipe; and a control arrangement comprising a control system for controlling the operation of the sampling system, wherein the control system comprises: a controller; a sampling valve; and a flow sensor pipe comprising a flow sensor and a second flow sensor pipe end arranged to be positioned in the dust removal pipe of the drilling apparatus, wherein in the method the controller turns on the sampling valve for conveying compressed air into the sampling pipe when the flow sensor detects air flow in the flow sensor pipe; and the controller turns off the sampling valve when the air flow stops. A first flow sensor pipe end may be positioned in free air outside the dust removal pipe of the drilling apparatus.

### BRIEF DESCRIPTION OF THE DRAWINGS

The accompanying drawings, which are included to provide a further understanding of the invention and constitute a part of this specification, illustrate embodiments of the invention and together with the description help to explain the principles of the invention. In the drawings:
Fig. 1 shows an example of a sampling system according to an example embodiment,
Fig. 2 shows an example of an apparatus configured to practice one or more example embodiments;
Fig. 3 shows an example of a dust removal arrangement according to an example embodiment,
Fig. 4 shows an example of a sampling arrangement according to an example embodiment, and
Fig. 5 shows an example method for taking a sample from drill cuttings flowing in a dust removal pipe of a drilling apparatus using a sampling system according to an example embodiment.

### DETAILED DESCRIPTION

Reference will now be made in detail to the embodiments of the present disclosure, an example of which is illustrated in the accompanying drawings.

The description below discloses some embodiments in such a detail that a person skilled in the art is able to utilize a sampling system, a dust removal arrangement, and a method based on the disclosure. Not all steps of the embodiments are discussed in detail, as many of the steps will be obvious for the person skilled in the art based on this disclosure.

For reasons of simplicity, item numbers will be maintained in the following exemplary embodiments in the case of repeating components.

According to an example embodiment, a radio-controlled sampling system purpose is to synchronizes the sampling system to work automatically together with a drilling work phases. In the beginning of drilling, a hole may be drilled without dust removal so that a drill bit may get a grip on a rock. After that a driller may open a dust removal flap of a dust removal pipe to allow dust to enter into the dust removal pipe. The driller may also lower a head of the dust removal pipe against the rock so that most of the rock dust and drill cuttings may be absorbed into a dust cyclone of the drill. When the drill rod is inside the rock along its entire length, the drill may automatically add a new drill rod and drilling may continue. However, there may be no dust suction during the rill rod change. When there is water in the drilled hole, the water may fly out of the hole with the flushing air messing up the dust removal pipe and the cyclone if it gets into the system. Therefore, the driller must stop the dust suction quickly so that the system does not need to be cleaned. Also, the sampling may be interrupted automatically when the dust removal is stopped and may be continued automatically when the suction is switched on again.

A remote controller of a control system may be located inside a drill cabin. The driller may need to start the sampling system at the beginning of a work shift. The sampling system may take care of the sampling automatically throughout a shift. A flow sensor may control collection of the sample by stopping the sampling when the drill has stopped the dust extraction. However, when the flow sensor is not working and automatic sampling does not work, the driller may control the control system remotely by using the remote controller. The remote controller may have at least three buttons: an on/off power button, a sampling on/off button, and a flushing on/off button.

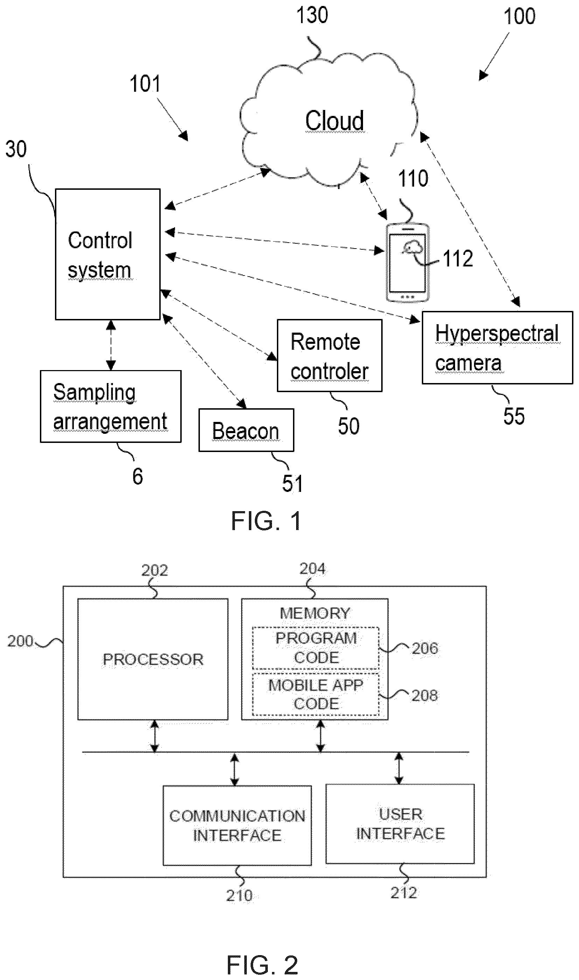

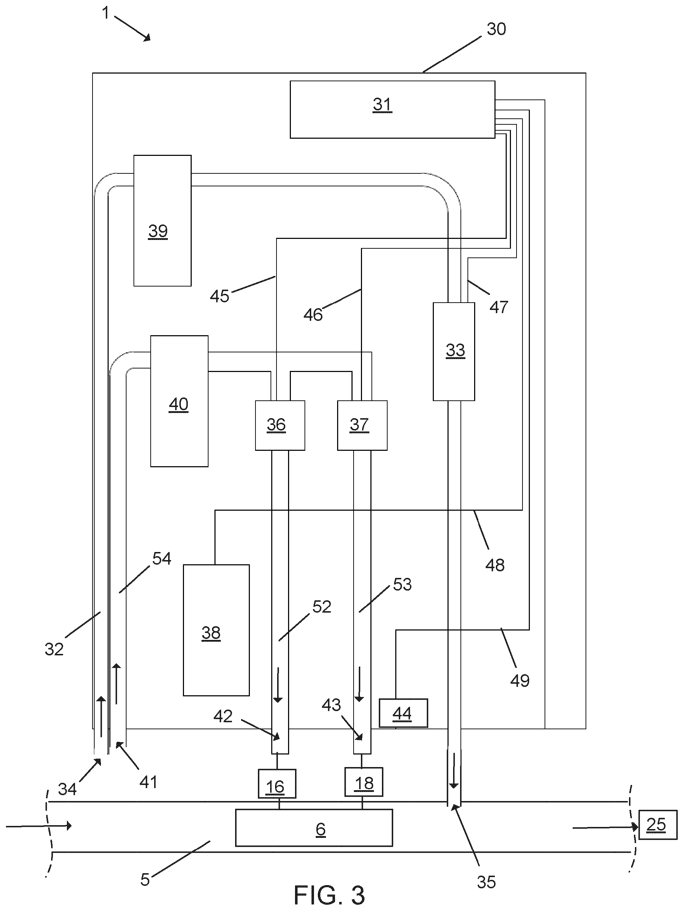

An example of figure 1 shows a sampling system 100 of a dust removal arrangement 1 shown in figure 3. The sampling system 100 may comprise a sampling arrangement 6 and a control arrangement 101. The control arrangement 101 may comprise at least one of the following: a control system 30, a remote controller 50, beacon 51, an application server cloud 130, a hyperspectral camera 55, and/or a mobile device 110 comprising a mobile application 112.

The mobile application 112 may be configured to be downloaded to a mobile device 110, for example from an application store associated with the operating system of the mobile device 110 or from any suitable remote application server. Alternatively, the mobile device 110 may be preconfigured with the mobile application 112 or the mobile application 112 may be loaded to the mobile device 110 over a wireless or wired communication interface. When executed at the mobile device 110, the mobile application 112 may cause, optionally together with native program code embedded in the mobile device 110, the mobile device 110 to perform one or more of the example embodiments described herein. For example, the mobile device 110 may be used to control and monitor operation of the sampling system 100.

The application server cloud 130, which may, for example, comprise one or a plurality of application servers and a processor. The application server cloud 130 may be configured to save and process sampling system information and/or control information.

According to an example embodiment, the mobile application is configured to be used for remote controlling and monitoring the sampling system 100.

The mobile device 110, the control system 30, the remote controller 50, the hyperspectral camera 55, the beacon 51, the sampling arrangement 6, and the application server cloud 130 may be configured to communicate with each other using any suitable communication interfaces, for example cellular mobile connections, local wireless access networks, a Bluetooth, a wireless local area networks (WLAN), or wired connections such as, for example, Ethernet.

FIG. 2 illustrates an example embodiment of an apparatus 200 configured to practice one or more example embodiments. The apparatus 200 may comprise a computing device, for example a server such as a client device, such as for example a mobile phone, mobile device 110, a beacon 51, a remote controller 50, a control system 30, and/or a controller 31. Although apparatus 200 is illustrated as a single device it is appreciated that, wherever applicable, functions of apparatus 200 may be distributed to a plurality of devices.

The apparatus 200 may comprise at least one processor 202. The at least one processor may comprise, for example, one or more of various processing devices, such as for example a co-processor, a microprocessor, a controller, a digital signal processor (DSP), a processing circuitry with or without an accompanying DSP, or various other processing devices including integrated circuits such as, for example, an application specific integrated circuit (ASIC), a field programmable gate array (FPGA), a microcontroller unit (MCU), a hardware accelerator, a special-purpose computer chip, or the like.

The apparatus 200 may further comprise at least one memory 204. The at least one memory may be configured to store, for example, computer program code 206 or the like, for example operating system software and application software. In case of the mobile device 110, the at least one memory 204 may be configured to store both native program code 206 and/or program code 208 of the mobile application 112.

The apparatus 200 may further comprise communication interface 210 configured to enable the apparatus 200 to transmit and/or receive information, to/from other apparatuses. The communication interface 210 may be configured to provide at least one wireless radio connection, such as for example a 3GPP mobile broadband connection (e.g. 3G, 4G, 5G), a wireless local area network (WLAN) connection such as for example standardized by IEEE 802.11 series or Wi-Fi alliance; a short range wireless network connection such as for example a Bluetooth, NFC (near-field communication), or radio frequency identification (RFID) connection; a wired connection such as for example a local area network (LAN) connection such as an Ethernet interface, a universal serial bus (USB) connection or an optical network connection, or the like; or a wired Internet connection. The communication interface 210 may comprise, or be configured to be coupled to, at least one antenna to transmit and/or receive radio signals. The communication interface 210 may be also configured to provide power to the apparatus 200, for example based on Power over Ethernet (PoE). One or more of the various types of connections may be also implemented as separate communication interfaces, which may be coupled or configured to be coupled to a plurality of antennas.

The apparatus 200 may further comprise a user interface 212 comprising an input device and/or an output device. The input device may take various forms such a keyboard, a touch screen, or one or more embedded control buttons. The output device may for example comprise a display, a speaker, a vibration motor, or the like.

The apparatus 200 comprises means for performing at least one method described herein. In one example, the means comprises the at least one processor, the at least one memory including program code configured to, when executed by the at least one processor, cause the apparatus to perform the method.

An example of figure 3 shows a dust removal arrangement 1 of a drilling apparatus. Holes may be drilled in the ground by the drilling apparatus, from which holes the drilled material, for example rock material, escapes to the ground surface from the borehole. A fluid, such as water, compressed air or a compressed air-water mixture, may be conveyed via the drill pipe to transport the rock material removed by the drill bit out of the borehole. The drilling apparatus may comprise a dust removal arrangement 1 for removing dust released from the borehole by suction.

The dust removal arrangement 1 may comprise a dust removal housing surrounding the drill pipe to be fitted over the borehole. The dust removal housing may be provided with a collar which is placed against the ground around the mouth opening of the borehole. On top of the dust removal housing there may be an opening for the drill pipe, at an end of which there may be a drill bit. The dust removal arrangement 1 may comprise a dust removal pipe 5 connected to the dust removal housing, for example to the side of the dust removal housing. The dust removal pipe 5 may be in flow communication with the dust removal housing. In addition, the dust removal arrangement 1 may comprises a suction apparatus 25 for forming suction in the dust removal pipe 5 and further in the dust removal housing.

According to an example embodiment, a dust removal arrangement 1 of a drilling apparatus comprises a dust removal housing to be fitted around or close a mouth opening of a borehole, a dust removal pipe 5 connected to the dust removal housing, a suction apparatus 25 for forming suction in the dust removal housing and the dust removal pipe 5, and a sampling system 100 for taking a sample from drilling dust flowing in the dust removal pipe 5 of the drilling apparatus. The sampling system 100 may comprise a sampling arrangement 6 comprising a sampling pipe 7, wherein at an end of the sampling pipe 7 there is a suction opening 8 which may be arranged to be positioned in the dust removal pipe 5 of the drilling apparatus to suck drilling dust into the sampling pipe 7. The sampling system 100 may further comprise a control arrangement 101 comprising a control system 30 for controlling the operation of the sampling system 1.

According to an example embodiment, a sampling system 100 for taking a sample from drill cuttings flow in a dust removal pipe 5 of a drilling apparatus comprises a sampling arrangement 6 comprising a sampling pipe 7, wherein at an end of the sampling pipe 7 there is a suction opening 8 which is arranged to be positioned in the dust removal pipe 5 of the drilling apparatus to suck drill cuttings into the sampling pipe 7. The sampling system 100 may further comprise a control arrangement 101 comprising a control system 30 for controlling the operation of the sampling system 1. The control system 30 may comprise a controller 31, a sampling valve 36, and a flow sensor pipe 32. The flow sensor pipe 32 may comprise a flow sensor 33 and a second flow sensor pipe end 35 arranged to be positioned in the dust removal pipe 5 of the drilling apparatus. A first flow sensor pipe end 34 may be arranged to be positioned in free air outside the dust removal pipe 5 of the drilling apparatus. The controller 31 may be configured to turn on the sampling valve 36 for conveying compressed air into the sampling pipe 7 when the flow sensor 33 detects air flow in the flow sensor pipe 32 and turn off the sampling valve 36 when the air flow stops.

A second flow sensor pipe end 35 may be arranged to be positioned in the dust removal pipe 5 of the drilling apparatus to cause air flow in the flow sensor pipe 32. A first flow sensor pipe end 34 may be arranged to be positioned in free air outside the dust removal pipe 5 of the drilling apparatus. The sampling valve 36 may convey compressed air into the sampling pipe 7 through a sampling outlet 42 of a sampling pipe 52. The sampling outlet 42 may be connected to an ejector connector 16 of the sampling arrangement 6. The sampling pipe 52 may receive the air from an air or fluid inlet 41 of a main air or fluid pipe 54. The air or fluid may be received from an air or fluid source.

According to an example embodiment, the control system 30 may further comprise a flushing valve 37. The controller 31 may be configured to turn on the flushing valve 37 for conveying compressed air or cleaning fluid into the sampling pipe 7 before the controller 31 turns on the sampling valve and/or turn on the flushing valve 37 for conveying the compressed air or cleaning fluid into the sampling pipe 7 after the controller 31 has turned off the sampling valve 35. The flushing valve 37 may convey compressed air or fluid into the sampling pipe 7 through a flushing outlet 43 of a sampling pipe 53, which may be connected to a cleaning connector 18 of the sampling arrangement 6. The flushing pipe 53 may receive the air or fluid from an air or fluid inlet 41 of a main air or fluid pipe 54.

According to an example embodiment, the control system 30 may further comprises at least one of the following: a heat sensor, a heater unit 38, a transceiver 44, a flow sensor filter 39, and/or an air or fluid filter 40. The control system may be physically located inside a control system box. The controller 31 may comprise the transceiver 44 or it may be located inside the control system box. The controller 31 may be connected to the controller 31 through to a transceiver connection 49. The transceiver 44 may for example comprise a short-range wireless transceiver, for example a Bluetooth transceiver or a wireless local area network (WLAN) transceiver. The transceiver may be coupled to at least one antenna to enable transmission and reception of signals.

According to an example embodiment, the controller 31 is configured to receive temperature information from the heat sensor and control the heater unit 38 through a heater unit connection 48. The controller 31 may be configured to receive flow information from the flow sensor 33 through a flow sensor connection 47. The controller may control the sampling valve 36 through a sampling valve connection 45. The controller 31 may control the flushing valve 37 through a flushing valve connection 46. The controller may also send information and receive information to/from the transceiver 44 through the transceiver connection 49. All the above mentioned connections 45 to 49 may be wired or wireless.

According to an example embodiment, the transceiver 44 is configured to transmit radio signals to and/or receive radio signals from at least one of the following: the application server cloud 130, the mobile device 110, the remote controller 50, the sampling arrangement 6, the hyperspectral camera 55, and/or the beacon 51 for sending sampling system information and/or receiving control and/or sampling system information.

According to an example embodiment, the control information comprises at least one of the following: information about when to turn on or off sampling or flushing, flushing time, a sampling method, sampling time, sampling pause time, flushing pause time, a flow sensor type, a flow limit for start-up, and/or a heater switch on limit.

According to an example embodiment, the sampling system information comprises at least one of the following: status of the flushing valve 37, flow sensor 33, and/or heat sensor; sensor data of the drill cuttings mineral quality; and/or usage history. The sensor data of the drill cuttings mineral quality may be received from the hyperspectral camera 55.

According to an example embodiment, the controller 31 is configured to switch on the heater unit 28 when temperature inside the control system 30 reaches a temperature threshold value or falls below the temperature threshold value, and/or switch off the heater unit 38 when temperature inside the control system 30 rises above the temperature threshold value. The heater may heat the control system box of the control system 30.

According to an example embodiment, the controller 31 is configured to turn on the sampling valve 36 when flow rate inside the sensor pipe 32 reaches a flow threshold value or exceeds the flow threshold value and turn off the sampling valve 36 when the flow rate inside the sensor pipe 32 goes below the flow threshold value.

According to an example embodiment, the flow sensor 33 is digital or analog.

According to an example embodiment, the control arrangement 101 further comprises at least one remote controller 50, configured to remotely turn on or off the sampling valve 36, and/or turn on or off the flushing valve 36.

According to an example embodiment, the control arrangement 101 further comprises at least one beacon 51 comprising at least one light configured to indicate at least one of the following: an error mode, ready to start mode, and/or ongoing sampling mode. Different colors or their combinations may be used to easily show mode of the sampling system. The beacon 51 may have three different colored lights: red, yellow and green. A red light may mean an error in the sampling system 100, for example a faulty flushing or sampling valve line. A yellow light may be a standby indicator, when the sampling system 100 is waiting for the start command. A green light may mean that sampling is on if the flow sensor 33 detects the air flow. The beacon 51 may be located so that the lights may be easily detected by people near the drill or a driver of the drill, for example, the beacon 51 may be located near the control system box.

According to an example embodiment, the sampling system 100 is configured to operate in a continuous sampling mode or in a periodic sampling mode.

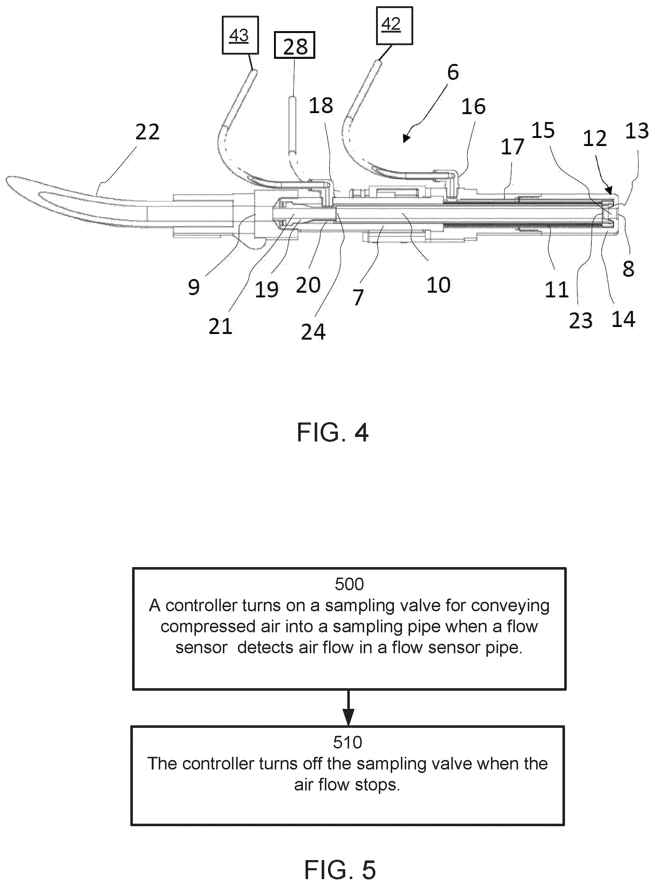

An example of figure 4 shows a sampling arrangement 6 for collecting a drilling dust sample from drilling dust flowing in the dust removal pipe 5. The sampling arrangement 6 may comprise a sampling pipe 7 in which there is a suction opening 8 positioned in the dust removal pipe 5. The suction opening 8 may be located at an end of the sampling pipe 7. The suction opening 8 may be positioned in the dust removal pipe 5 so that it faces towards the flow direction of the drilling dust.

In addition, the sampling pipe 7 may comprise an outlet opening 9 being in flow communication with a separating device, for example through a connecting pipe 22. The outlet opening 9 may be located at a second end of the sampling pipe 7. The separating device may be a cyclone, a filter or a combination thereof.

The sampling pipe 7 may comprise a suction opening 8 to be fitted to the dust removal pipe 5 of the drilling apparatus to suck drilling dust from the dust removal pipe 5 into the sampling pipe 7. The sampling pipe 7 may further comprise a suction pipe 10 into which the drilling dust sucked from the dust removal pipe 5 is arranged to be conveyed via the suction opening 8 of the sampling pipe 7.

The sampling pipe 7 may further comprise an alternating-current coil 11 wound around the suction pipe 10. The coil 11 may be connectable to alternating current. The sampling arrangement 6 or the sampling pipe 7 may comprise an inverter 28 for converting direct current into alternating current. The inverter 28 may be connected to the coil 11.

The sampling pipe 7 may comprise a flow amplifier 12 for forming suction in the suction opening 8 of the sampling pipe. The flow amplifier 12 may comprise an ejector nozzle 13 for feeding compressed air or other pressurized fluid into the sampling pipe 7 and/or the suction pipe 10. The ejector nozzle 13 and the compressed air flow that is fed from the ejector nozzle 13 may be directed away from the suction opening 8 of the sampling pipe. The ejector nozzle 13 may be located between the suction opening 8 of the sampling pipe 7 and an end 23 of the suction pipe 10. The sampling pipe 7 may comprise an end piece 14 provided with a drilling dust suction channel 15 and having the ejector nozzle 13. The end piece 14 may be located at the end of the sampling pipe 7.

The ejector nozzle 13 may be arranged to open when compressed air is fed to the ejector nozzle 13, and to close when the feeding of compressed air to the ejector nozzle 13 is stopped. The end piece 14 may be made for example of elastic material, for example rubber, arranged to stretch and thereby open the ejector nozzle 13 when compressed air is fed to the ejector nozzle 13, and to shrink and thereby close the ejector nozzle 13 when the feeding of compressed air to the ejector nozzle 13 is stopped. The pressure of the compressed air that is fed to the ejector nozzle 13 may be higher than the pressure of drilling dust in the dust removal pipe 5.

The sampling pipe 7 may comprise an ejector connector 16 for feeding compressed air to the ejector nozzle 13, and an ejector channel 17 connecting the ejector connector 16 and the ejector nozzle 13. The ejector connector 16 may be connectable to a sampling air outlet 42. Typically, the ejector channel 17 may surround the suction pipe 10. The ejector channel 17 may be annular.

The sampling pipe 7 may comprise a cleaning connector 18 via which compressed air or other cleaning fluid, such as water, may be feedable to the suction pipe 10 towards the suction opening 8 of the sampling pipe 7. The cleaning connector 18 may be connectable to a flushing air or fluid outlet 43 feeding the cleaning fluid. The sampling pipe 7 may comprise a cleaning nozzle 19 comprising elastic material and disposed in a longitudinal direction of the sampling pipe 7 at the cleaning connector 18. The cleaning nozzle 19 may be arranged to compress and open flow communication from the cleaning connector 18 to the suction pipe 10 when compressed air or other fluid may be fed into the cleaning connector 18. The cleaning nozzle 19 may have flat points on the outer surface thereof at which the cleaning nozzle 19 may be arranged to compress. The sampling pipe 7 may comprise a cleaning chamber 20 surrounding the cleaning nozzle 19 and being in flow communication with the cleaning connector 18. The cleaning nozzle 19 may be arranged to stretch and thereby close flow communication from the cleaning connector 18 to the suction pipe 10 when the feeding of compressed air or fluid to the cleaning connector 18 is stopped. The cleaning nozzle 19 may be positioned at the second end 24 of the suction pipe 10, for example against the second end 24 of the suction pipe 10. The cleaning nozzle 19 may comprise a flow channel 21 through which the drilling dust flows towards the outlet opening 9 of the sampling pipe.

The sampling arrangement 6 may be equipped with a control arrangement 101 which may be separate or integrated into a control system of the drilling apparatus. The control arrangement 101 may be arranged to control functions of the sampling arrangement 6, such as the feeding of compressed air or fluid to the ejector connector 16 and the cleaning connector 18 and feeding of current to the coil 11.

Figure 5 illustrates an example of a method for taking a sample from drill cuttings flowing in a dust removal pipe 5 of a drilling apparatus using a sampling system 100. The sampling system 100 may comprise a sampling arrangement 6, comprising a sampling pipe 7, wherein at an end of the sampling pipe 7 there may be a suction opening 8 which may be arranged to be positioned in the dust removal pipe 5 of the drilling apparatus to suck drill cuttings into the sampling pipe 7. The sampling system 100 may further comprise a control arrangement 101 comprising a control system 30 for controlling the operation of the sampling system 1. The control system 30 may comprise a controller 31, a sampling valve 36, and a flow sensor pipe 32. The flow sensor pipe 32 may comprise a flow sensor 33 and a second flow sensor pipe end 35 arranged to be positioned in the dust removal pipe 5 of the drilling apparatus. A first flow sensor pipe end 34 may be arranged to be positioned in free air outside the dust removal pipe 5 of the drilling apparatus.

At operation 500, the method may comprise that the controller 31 may turn on the sampling valve 36 for conveying compressed air into the sampling pipe 7 when the flow sensor 33 detects air flow in the flow sensor pipe 32.

At operation 510, the method may comprise that the controller 31 may turn off the sampling valve 36 when the air flow stops.

A sampling system 100 and/or a dust removal arrangement 1 may be configured to perform or cause performance of any aspect of the method described herein. Further, a computer program or a computer program product may comprise program code configured to cause, when executed by an apparatus of a sampling system 100 and/or a dust removal arrangement 1, an apparatus to perform any aspect of the method(s) described herein.

The dust removal arrangement 1 and the sampling arrangement 6 may operate as follows. A hole may be drilled in the rock by the drill of the drilling apparatus. Drilling dust comprising rock material escaping from the borehole may be sucked via the dust removal housing into the dust removal pipe 5. From the dust removal pipe 5, the drilling dust may be sucked into the sampling pipe 7 via the suction opening 8. The drilling dust may flow through the suction channel 15 of the end piece, the suction pipe 10 and the flow channel 21 of the cleaning nozzle 19 to the outlet opening 9.

The controller 31 may turn on the sampling valve 36 for conveying compressed air into the sampling pipe 7 when the flow sensor 33 detects air flow in the flow sensor pipe 32. The compressed air may be fed from the sampling pipe 52 to the ejector channel 16. The ejector channel 16 may feed the compressed air to the ejector nozzle 13, whereby the ejector nozzle 13 may open and compressed air may flow from the ejector nozzle 13 towards the suction pipe 10. The air stream of the ejector nozzle 13 may suck drilling dust from the dust removal pipe 5 via the suction opening 8 into the sampling pipe 7. The controller 31 may turn off the sampling valve 36 when the air flow stops. When the feeding of compressed air from the ejector channel 16 to the ejector nozzle 13 is stopped, the ejector nozzle 13 may close.

The controller 31 may turn on the flushing valve 37 for cleaning the sampling pipe 7. The controller 31 may turn on the flushing valve 37 for conveying compressed air or cleaning fluid into the sampling pipe 7 before the controller 31 turns on the sampling valve 36. The controller 31 may also turn on the flushing valve 36 for conveying the compressed air or cleaning fluid into the sampling pipe 7 after the controller 31 has turned off the sampling valve 35.

When the sampling pipe 7 is cleaned, the feeding of compressed air to the ejector nozzle 13 may be stopped, whereby the ejector nozzle 13 may close. Compressed air or other fluid, for example water from a flushing pipe 53 may be fed to the cleaning connector 18. The compressed air or other fluid may be fed from the cleaning connector 18 to the cleaning nozzle 19 and further into the suction pipe 10 towards the suction opening 8. The cleaning fluid may remove blockages in the suction pipe 10 and the suction opening 8. When the feeding of cleaning fluid is stopped, the cleaning nozzle 19 may close flow communication from the cleaning connector 18 to the suction pipe 10. The feeding of compressed air to the ejector nozzle 13 may be restarted, whereby the ejector nozzle 13 may open and compressed air may flow from the ejector nozzle 13 to the sampling pipe 7. The drilling dust may be removed from the sampling pipe 7 via the outlet opening 9.

It will be clear to those skilled in the art that the various embodiments of the invention are not limited exclusively to the examples given above but may vary within the scope of the claims set out hereinafter.

It is obvious to a person skilled in the art that with the advancement of technology, the basic idea of the invention may be implemented in various ways. The invention and its embodiments are thus not limited to the examples described above, instead they may vary within the scope of the claims.

It will be understood that any benefits and advantages described above may relate to one embodiment or may relate to several embodiments. The embodiments are not limited to those that solve any or all of the stated problems or those that have any or all of the stated benefits and advantages.

The term "comprising" is used in this specification to mean including the feature(s) or act(s) followed thereafter, without excluding the presence of one or more additional features or acts. It will further be understood that reference to 'an' item refers to one or more of those items.

## Claims

1. A sampling system (100) for taking a sample from drill cuttings flow in a dust removal pipe (5) of a drilling apparatus, wherein the sampling system (100) comprises
a sampling arrangement (6) comprising a sampling pipe (7), wherein at an end of the sampling pipe (7) there is a suction opening (8) which is arranged to be positioned in the dust removal pipe (5) of the drilling apparatus to suck drill cuttings into the sampling pipe (7); and
a control arrangement (101) comprising a control system (30) for controlling the operation of the sampling system (100), wherein the control system (30) comprises
a controller (31);
a sampling valve (36); and
a flow sensor pipe (32) comprising a flow sensor (33) and a second flow sensor pipe end (35) arranged to be positioned in the dust removal pipe (5) of the drilling apparatus, wherein the controller (31) is configured to
turn on the sampling valve (36) for conveying compressed air into the sampling pipe (7) when the flow sensor (33) detects air flow in the flow sensor pipe (32); and
turn off the sampling valve (36) when the air flow stops.

2. The sampling system (100) according to claim 1, wherein the control system (30) further comprises a flushing valve (37), wherein the controller (31) is configured to
turn on the flushing valve (37) for conveying compressed air or cleaning fluid into the sampling pipe (7) before the controller (31) turns on the sampling valve (36); and/or
turn on the flushing valve (37) for conveying the compressed air or cleaning fluid into the sampling pipe (7) after the controller (31) has turned off the sampling valve (36).

3. The sampling system (100) according to claim 1 or claim 2, wherein the control system (30) further comprises at least one of the following: a heat sensor, a heater unit (38), a transceiver (44), a flow sensor filter (39), and/or an air or fluid filter (40).

4. The sampling system (100) according to claim 3, wherein the controller (31) is configured to
switch on the heater unit (38) when temperature inside the control system (30) reaches a temperature threshold value or falls below the temperature threshold value; and/or
switch off the heater unit (38) when temperature inside the control system (30) rises above the temperature threshold value.

5. The sampling system (100) according to any one of the preceding claims, wherein the controller (31) is configured to
turn on the sampling valve (36) when flow rate inside the sensor pipe (32) reaches a flow threshold value or exceeds the flow threshold value; and
turn off the sampling valve (36) when the flow rate inside the sensor pipe (32) goes below the flow threshold value.

6. The sampling system (100) according to any one of the preceding claims, wherein the flow sensor (33) is digital or analog.

7. The sampling system (100) according to any one of the preceding claims, wherein the control arrangement (101) further comprises at least one remote controller (50) configured to remotely turn on or off the sampling valve (36), and/or turn on or off the flushing valve (37).

8. The sampling system (100) according to any one of the preceding claims, wherein the control arrangement (101) further comprises at least one beacon (51) comprising at least one light configured to indicate at least one of the following: an error mode, ready to start mode, and/or ongoing sampling mode.

9. The sampling system (100) according to any one of the preceding claims, wherein the control arrangement (101) further comprises at least one of the following: a hyperspectral camera (55), an application server cloud (130), and/or a mobile device (110) comprising a mobile application (112), wherein the mobile application is configured to be used for remote controlling and monitoring the sampling system (100).

10. The sampling system (100) according to claim 9, wherein the transceiver (44) is configured to transmit radio signals to and/or receive radio signals from at least one of the following: the application server cloud (130), the mobile device (110), the remote controller (50), the sampling arrangement (6), the hyperspectral camera (55), and/or the beacon (51) for sending sampling system information and/or receiving control and/or sampling system information.

11. The sampling system (100) according to claim 10, wherein the control information comprises at least one of the following: information about when to turn on or off sampling or flushing, flushing time, a sampling method, sampling time, sampling pause time, flushing pause time, a flow sensor type, a flow limit for start-up, and/or a heater switch on limit.

12. The sampling system (100) according to claim 10 or claim 11, wherein the sampling system information comprises at least one of the following:
status of the flushing valve (37), flow sensor (33), and/or heat sensor;
sensor data of the drill cuttings mineral quality; and/or
usage history.

13. The sampling system (100) according to any one of the preceding claims, wherein the sampling system (100) is configured to operate in a continuous sampling mode or in a periodic sampling mode.

14. A dust removal arrangement (1) of a drilling apparatus, which comprises a dust removal housing to be fitted around or close a mouth opening of a borehole, a dust removal pipe (5) connected to the dust removal housing, a suction apparatus (25) for forming suction in the dust removal housing and the dust removal pipe (5), and a sampling system (100) for taking a sample from drilling dust flowing in the dust removal pipe (5) of the drilling apparatus according to any one of the preceding claims, wherein the sampling system (100) comprises
a sampling arrangement (6) comprising a sampling pipe (7), wherein at an end of the sampling pipe (7) there is a suction opening (8) which is arranged to be positioned in the dust removal pipe (5) of the drilling apparatus to suck drilling dust into the sampling pipe (7); and
a control arrangement (101) comprising a control system (30) for controlling the operation of the sampling system (1).

15. A method for taking a sample from drill cuttings flowing in a dust removal pipe (5) of a drilling apparatus using a sampling system (100), wherein the sampling system (100) comprises
a sampling arrangement (6) comprising a sampling pipe (7), wherein at an end of the sampling pipe (7) there is a suction opening (8) which is arranged to be positioned in the dust removal pipe (5) of the drilling apparatus to suck drill cuttings into the sampling pipe (7); and
a control arrangement (101) comprising a control system (30) for controlling the operation of the sampling system (1), wherein the control system (30) comprises
a controller (31);
a sampling valve (36); and
a flow sensor pipe (32) comprising a flow sensor (33) and a second flow sensor pipe end (35) arranged to be positioned in the dust removal pipe (5) of the drilling apparatus, wherein in the method the controller (31)
turns on the sampling valve (36) for conveying compressed air into the sampling pipe (7) when the flow sensor (33) detects air flow in the flow sensor pipe (32); and
turns off the sampling valve (36) when the air flow stops.
